# EUROPÄISCHE PATENTSCHRIFT

(11) **EP 1 186 391 B1**
(45) Veröffentlichungstag und Bekanntmachung des Hinweises auf die Patenterteilung: **03.11.2004**
(21) Anmeldenummer: 01119682.1
(22) Anmeldetag: 23.08.2001
(51) Int. Cl.: B29B 7/84, B01F 15/00, B29C 67/24, B29B 7/74

(54) **Verfahren zum Herstellen von Kunststoff-Formteilen aus einem fliessfähigen Reaktionsgemisch**
Method for producing plastic formpieces from a flowable reaction mixture
Procédé pour la fabrication de pièces moulées en matières plastiques à partir d'un mélange réactif coulable

(30) Priorität: 05.09.2000 DE 10044013
(43) Veröffentlichungstag der Anmeldung: 13.03.2002
(73) Patentinhaber: Hennecke GmbH, 51379 Leverkusen (DE)
(72) Erfinder: Sulzbach, Hans-Michael, 53639 Königswinter (DE); Raffel, Reiner, 53721 Siegburg (DE); Duschanek, Helmut, 53639 Königswinter (DE)
(74) Vertreter: Feldhues, Michael L.F., Dr.

(56) Entgegenhaltungen:
- EP-A- 1 029 652
- WO-A-97/11824
- DE-B- 1 198 531
- DE-U- 8 616 880
- GB-A- 895 779
- US-A- 3 621 892
- US-A- 4 275 172
- US-A- 4 439 386
- US-A- 4 898 714
- US-A- 5 586 724
- PATENT ABSTRACTS OF JAPAN vol. 010, no. 311 (M-528), 23. Oktober 1986 (1986-10-23) & JP 61 121903 A (MATSUSHITA ELECTRIC IND CO LTD), 9. Juni 1986 (1986-06-09)
- PATENT ABSTRACTS OF JAPAN vol. 011, no. 114 (M-579), 10. April 1987 (1987-04-10) & JP 61 258712 A (MATSUSHITA ELECTRIC IND CO LTD), 17. November 1986 (1986-11-17)

## Beschreibung

Die Erfindung betrifft ein Verfahren und eine Vorrichtung zum Herstellen von Kunststoff-Formteilen aus einem fließfähigen Reaktionsgemisch, welches schussweise aus fließfähigen Reaktionskomponenten in der Mischkammer eines Mischkopfes hergestellt und über ein Auslaufrohr in aufeinanderfolgend daran vorbeigeführte Formwerkzeuge eingebracht wird, und wobei die Kunststoff-Formteile nach dem Aushärten entformt werden.

Hierzu bedient man sich im Allgemeinen eines umlaufenden Werkzeugträgers in Form eines sogenannten Rundtisches oder endlosen Bandes, auf welchem eine Vielzahl von Formwerkzeugen angeordnet ist. Durch Weiterbewegen des Werkzeugträgers wird jeweils das nächste Formwerkzeug zum Füllen seiner Kavität für ein ausreichendes Zeitintervall unter dem Mischkopf bzw. Auslaufrohr plaziert. Dabei entspricht ein Zeitintervall zum Füllen einer Kavität jeweils im wesentlichen einer Schusszeit. Die Weiterbewegung erfolgt bei feststehendem Mischkopf taktweise, wobei der Mischkopf zum Befüllen eines Formwerkzeuges jeweils angedockt wird.

Wird der Mischkopf bei Schussende vollständig entleert, dringt in die Mischkammer Umgebungsluft ein. Da Luft, also Sauerstoff und Stickstoff, eine nur verschwindend geringe Löslichkeit in der Polyol-Isocyanat-Mischung aufweisen, kommt es beim Einbringen der Rohstoffkomponenten bei Schussbeginn zu einer Verschäumung der Reaktionsmischung. Dieser bei jedem Schuss anfänglich gebildete Schaum muss demgemäss aufgefangen und verworfen werden, da er andernfalls zu Störungen des Formteils führt.

EP-A-1 029 652, US-4,439,386, Japan Patent Abstract JP-61 121 903, DE-A-1 198 531, US-A-3,621,892 offenbaren das Anlegen eines Vakuums oder Unterdrucks in der Mischkammer, nicht jedoch den Ersatz der Umgebungsgase durch Einleiten von Kohlendioxid.

US-A-5,586,724 schildert die Spülung und Reinigung der Mischkammer nach Schussende durch Gase wie Luft oder Stickstoff. US-A-5,586,724 offenbart nicht den Einsatz von Kohlendioxid.

WO 97/11824 und US-A-4, 275,172 offenbaren nicht und betreffen nicht den Ersatz der in der Mischkammer befindlichen Umgebungsgase durch Vakuum oder andere Gase. WO 97/11824 beschäftigt sich mit der Herstellung von Polyurethan-Schaum unter Einsatz von Kohlendioxid als physikalischem Treibmittel. Dabei werden die Reaktionskomponenten und flüssiges Kohlendioxid in die Mischkammer eingebracht und das Reaktionsgemisch nach der Vermischung entspannt. In US-A-4, 275,172 wird das Treibmittel Kohlendioxid durch Zugabe von Wasser in das Reaktionsgemisch chemisch erzeugt. Das nach der Vermischung und Entspannung gasförmige Kohlendioxid führt zum Aufschäumen des Polyurethan-Schaums. Die in der Mischkammer befindlichen Umgebungsgase werden nach der Lehre von WO 97/11824 und US-A-4, 275,172 vor dem Schuss jedoch nicht entfernt.

GB-A-895 779 betrifft eine Mischvorrichtung, in der reaktive flüssige Mischungen, wie beispielsweise Polyurethan-Reaktionsgemische, erzeugt werden können. GB-A-895 779 offenbart aber nicht den Ersatz der in der Mischkammer befindlichen Umgebungsgase durch Kohlendioxid oder Vakuum vor Einleitung des nächsten Schusses. GB-A-895 779 offenbart lediglich, dass Füllstoffe und Gase wie Kohlendioxid oder Luft als zusätzliche Komponenten in die Mischkammer eingebracht und dort mit dem restlichen Reaktionsgemisch vermischt werden können. Ein Einleiten von Kohlendioxid zum Spülen und Ersatz der Umgebungsgase in der Mischkammer nach dem Austrag des Reaktionsgemisches und vor dem Einleiten des jeweils nächsten Schusses wird in GB-A-895 779 nicht gelehrt.

Nach einem Vorschlag der Anmelderin gemäß EP-A 1 033 230 wird die Schaumbildung dadurch vermieden, dass der Mischkopf mit einem Verschlussorgan versehen wird und ferner ein Reaktionsgemisch eingesetzt wird, das bezüglich seiner Reaktivität auf das Zeitintervall zwischen Ende eines Schusses, bei dem der Mischkammerauslass durch das Verschlussorgan verschlossen wird, und dem Beginn der nächsten Schusses, der durch Öffnen des Verschlussorgans eingeleitet wird, derart abgestimmt ist, dass die Mischkammer zwischen zwei Schüssen gefüllt bleiben kann. Ein derartiges Verfahren ist an eine strenge Einhaltung der Taktzeiten bzw. der Intervallzeiten zwischen den Schüssen gebunden, wenn nicht unwirtschaftlich lange Aushärtezeiten in Kauf genommen werden müssen.

Aufgabe der vorliegenden Erfindung ist es, die Schaumbildung bei Schussbeginn auch dann zu vermeiden, wenn die Mischkammer nach jedem Schuss entleert wird.

Dies gelingt erfindungsgemäß dann, wenn jeweils vor Schussbeginn die Umgebungsluft aus der Mischkammer entfernt wird.

Gegenstand der vorliegenden Erfindung ist demgemäß ein Verfahren zur Herstellung von Polyurethan-Formkörpern aus einer fließfähigen Polyol-Polyisocyanat-Reaktionsmischung, die schussweise aus den fließfähigen Komponenten in der Mischkammer eines Mischkopfes hergestellt und über ein Auslaufrohr in Formwerkzeuge eingebracht wird, wobei die Mischkammer jeweils nach dem Schuss angenähert vollständig entleert wird, das dadurch gekennzeichnet ist, dass zumindest vor Einleitung des jeweils nächsten Schusses die in der Mischkammer befindlichen Umgebungsgase entfernt werden.

Erfindungsgemäß werden die in der Mischkammer vorhandenen Umgebungsgase durch in dem Reaktionsgemisch lösliches Kohlendioxid ersetzt. Das in dem Reaktionsgemisch lösliche Gas soll eine derartige Löslichkeit und Lösungsgeschwindigkeit aufweisen, dass eventuell anfänglich gebildete Blasen innerhalb der Formfüllzeit vollständig gelöst werden. Besonders geeignet als lösliches Gas ist Kohlendioxid.

Zur Durchführung der Erfindung ist es im Allgemeinen ausreichend, nach Beendigung eines Schusses und Entleerung der Mischkammer sowie Abdockung des Mischkopfes vom Formwerkzeug die Mischkammer mit dem löslichen Gas, Kohlendioxid, zu spülen, so dass die Umgebungsluft aus der Mischkammer ausgespült wird.

Intensität und Dauer des Spülvorgangs werden vorzugsweise so gesteuert, dass der Luft-Partialdruck (Summe der Partialdrücke von Sauerstoff und Stickstoff) in der Mischkammer weniger als 50 mbar, vorzugsweise weniger als 10 mbar, insbesondere bevorzugt weniger als 3 mbar, beträgt.

Nach einer bevorzugten Ausführungsform der Erfindung weist der Mischkopf am Auslassende ein Verschlussorgan, vorzugsweise in Form eines quer zur Auslassöffnung angeordneten Schiebers, auf. Der Schieber kann unmittelbar am Auslass des Mischkopfes angeordnet sein oder, wenn stromab des Mischkopfes ein Auslaufrohr vorgesehen ist, an dem Auslaufrohr an einer Stelle unterhalb des Mischkopfauslasses. Vorzugsweise ist das Veschlussorgan für die Mischkammer so weit stromab vom unmittelbaren Mischkammerauslass angeordnet, wie es die Geometrie von Mischkopf, Auslaufrohr und Andockstelle zur Form erlaubt.

Die Vorsehung eines Verschlussorganes erlaubt es, den Spülvorgang dadurch zu beschleunigen, dass bei geschlossenem Verschlussorgan zunächst die in den Mischkopf eingedrungene Umgebungsluft abgesaugt wird und anschließend das lösliche Gas eingeleitet wird.

Nach einer nicht erfindungsgemässen Ausführungsform der Erfindung wird bei Mischköpfen mit Verschlussorgan die im Mischkopf befindliche Umgebungsluft durch ein Vakuum ersetzt. Hierzu ist in der Mischkammerwand ein Ventil-gesteuerter Vakuumanschluss vorgesehen. Der Vakuumanschluss kann zu einer Vakuumpumpe fuhren, mittels derer die Umgebungsluft aus der Mischkammer evakuiert wird. Vorzugsweise ist ein Vakuumbehälter vorgesehen, der über eine Vakuumleitung mit dem Vakuumventil der Mischkammer verbunden ist. Die Aufrechterhaltung des Vakuums in dem Vakuumbehälter kann durch eine kontinuierlich oder periodisch betriebene Vakuumpumpe gewährleistet werden.

Zur Durchführung des nicht beanspruchten Verfahrens wird vor Schussbeginn das Verschlussorgan der Mischkammer geschlossen, die Mischkammer evakuiert, die Ventile für die Einleitung der Komponenten des Reaktionsgemisches in die Mischkammer geöffnet und in dem Augenblick, in dem die Mischkammer mit Reaktionsgemisch gefüllt ist, das Verschlussorgan geöffnet.

Die Steuerung der verschiedenen aufeinanderfolgenden Schritte erfolgt zweckmäßigerweise durch elektronische Ansteuerung entsprechender elektrischer oder pneumatischer Stellorgane.

Die Erfindung wird nachfolgend anhand der beigefügten Figuren näher erläutert:

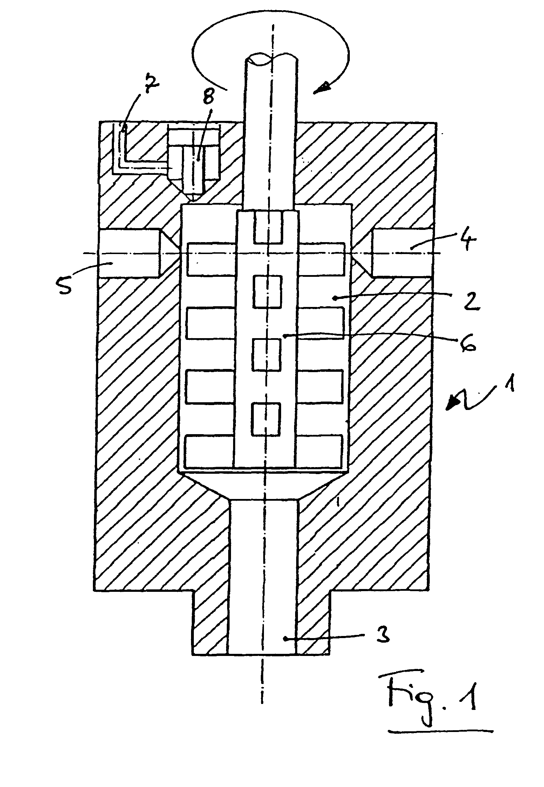

Fig. 1 zeigt schematisch im Schnitt einen Rührermischkopf 1 mit einer Mischkammer 2, einem Auslaufrohr 3, den ventilgesteuerten Einleitorganen 4 und 5 für die Polyol- bzw. Isocyanat-Komponente sowie den Rührer 6. Erfindungsgemäß ist zusätzlich ein ventilgesteuertes 8 Gaseinleitorgan 7 vorgesehen, durch das das lösliche Gas, Kohlendioxid, in die Mischkammer eingeleitet werden kann.

Erfindungsgemäß wird nun vor Schussbeginn bei geschlossenen Komponenten-Einleitorganen 4 und 5 über Leitung 7 und Ventil 8 Kohlendioxid in die Mischkammer eingeleitet, wobei die in der Mischkammer befindlichen Umgebungsgase aus der Mischkammer ausgespült werden. Dies kann durch eine automatische Steuerung ohne Zeitverlust während des Formwechsels erfolgen. Nachdem die Umgebungsluft hinreichend entfernt ist, wird der Schuss durch Betätigung der Ventile für die Komponenten-Einleitorgane 4 und 5 eingeleitet.

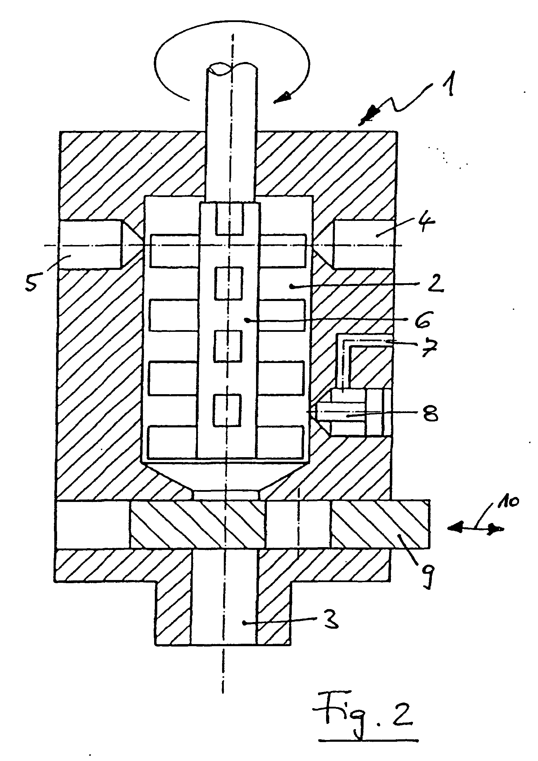

Fig. 2 zeigt einen Rührermischkopf 1 wie in Fig 1, wobei die Ziffern jeweils gleiche Elemente wie in Fig. 1 bezeichnen. Bei dem Rührermischkopf gemäß Fig. 2 ist zusätzlich ein als Schieber 9 ausgebildetes Verschlussorgan für die Mischkammer 2 vorgesehen. Der Schieber 9 ist in Richtung des Doppelpfeils 10 verschiebbar. Die dargestellte Verschlussstellung des Schiebers 9 wird vor Schussbeginn eingestellt. Anschließend wird die Mischkammer 2 über die Leitung 7 und Ventil 8 evakuiert. Nach Erreichen eines Druckes in der Mischkammer 2 von vorzugsweise weniger als 50 mbar, besonders bevorzugt weniger als 10 mbar, insbesondere bevorzugt weniger als 3 mbar, werden die Ventile für die Komponenten-Einlassorgane 4 und 5 geöffnet und in dem Augenblick, in dem die Mischkammer mit der Reaktionsmischung gefüllt ist, der Schieber 9 durch Verschieben nach links geöffnet. Dieses Verfahren wird nicht beansprucht.

Der Mischkopf gemäß Fig. 2 kann erfindungsgemäß auch so betrieben werden, dass nach Evakuierung der Mischkammer 2 über die Leitung 7 zunächst Kohlendioxid in die Mischkammer eingeleitet wird.

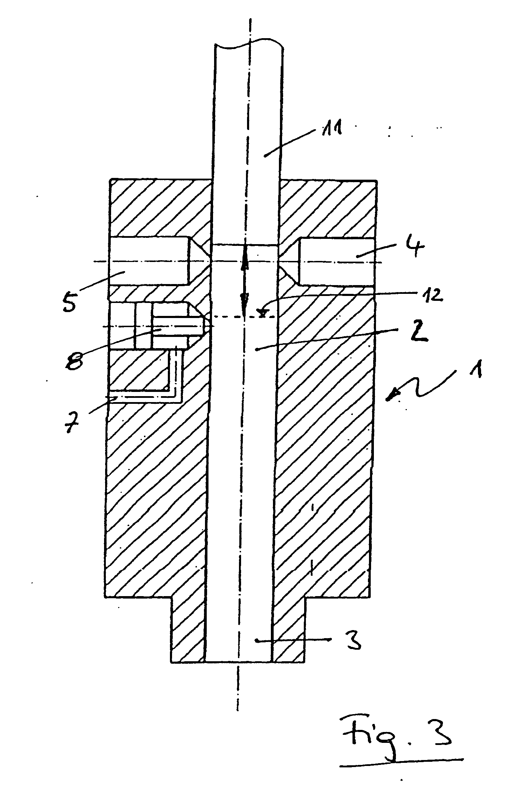

Fig. 3 zeigt schematisch im Schnitt einen Hochdruck-Injektionsmischkopf 1 für eine Betriebsweise analog der Betriebsweise des Rührermischkopfes gemäß Fig. 1.

Der Hochdruck-Injektions-Mischkopf besteht aus einer zylindrischen Mischkammer 2 und dem daran anschließenden Auslaufrohr 3 sowie den Injektionsdüsen 4 und 5, durch die bei einem Druck von typischerweise mehr als 100 bar die Komponenten eingedüst werden. Ferner ist ein Ausstosskolben 11 vorgesehen, der hydraulisch entlang der Achse der Mischkammer 2 zum Ausstoss restlicher Mengen des Reaktionsgemisches am Ende eines Schusses bis zur Auslauföffnung des Auslaufrohres 3 bewegt werden kann. Erfindungsgemäß ist ein Ventileinlass 7, 8 für das in der Reaktionsmischung lösliche Gas vorgesehen, so dass vor Schussbeginn die Atmosphäre in Mischkammer und Auslaufrohr durch Kohlendioxid ersetzt werden kann. Vorzugsweise wird während der Verdrängung der Umgebungsluft aus der Mischkammer der Ausstosskolben 11 bis zur Ebene 12 knapp oberhalb des Einlasses für das Kohlendioxid gefahren.

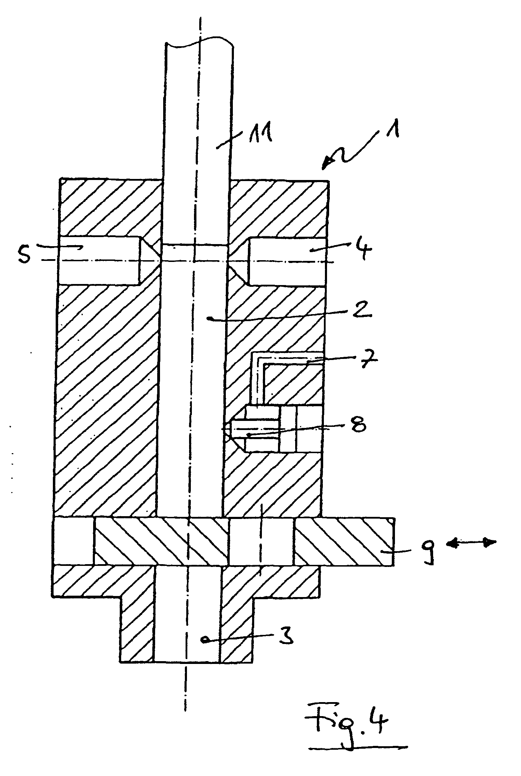

Fig. 4 zeigt einen Hochdruck-Injektions-Mischkopf für eine Betriebsweise analog dem Rührermischkopf gemäß Fig. 2, wobei der Hochdruck-Injektions-Mischkopf nunmehr einen Verschlussschieber 9 aufweist, so dass die Mischkammer 2 über die Ventil-gesteuerte 8 Vakuumleitung 7 evakuiert werden kann.

Eine alternative nicht erfindungsgemäße Betriebsweise besteht darin, dass vor Schussbeginn bei geöffnetem Verschlusschieber 9 der Ausstosskolben 11 bis an die Oberkante des Verschlusschiebers 9 unter Verdrängung der Luft aus der Mischkammer 2 herangefahren wird, anschließend der Verschlusschieber 9 geschlossen wird, danach der Ausstosskolben 11 in die Arbeitstellung (wie dargestellt) zurückgefahren wird, die Hochdruck-Injektionsventile 4 und 5 geöffnet werden, und nach Füllung der Mischkammer 2 der Verschlusschieber 9 geöffnet wird.

Eine weitere erfindungsgemäße Betriebsweise besteht darin, dass in die evakuierte Mischkammer 2 über die ventilgeteuerte Kohlendioxid-Gasleitung Kohlendioxid eingelassen wird.

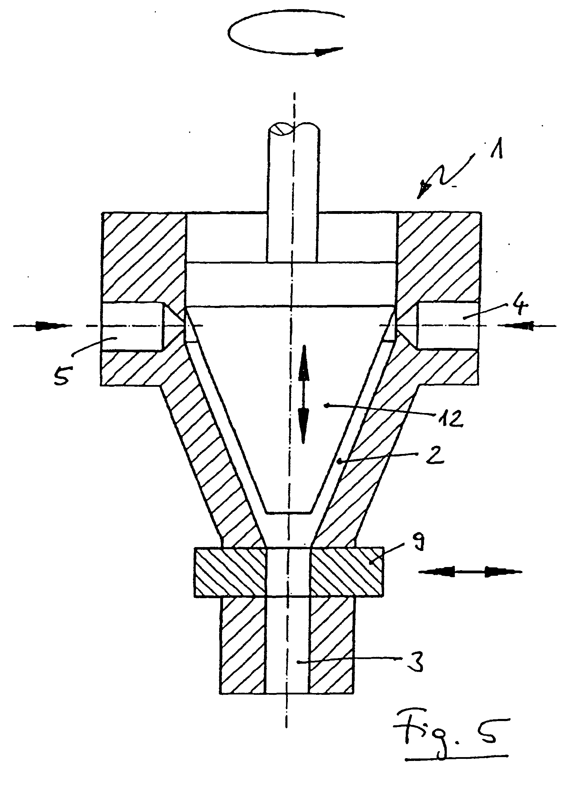

Fig. 5 zeigt einen Friktionsmischer 1 mit einer Mischkammer 2, die durch eine äußere konische Mischkammerwand und einen dazu komplementären Rotor 12 gebildet wird. An der Konusbasis werden die Reaktionskomponenten über Düsen 4 und 5 in die Mischkammer eingedüst und durch die Friktion zwischen Mischkammergehäuse und dem Rotor, der typischerweise mit einer Geschwindigkeit in der Größenordnung von 10 000 UpM rotiert, vermischt. Bei Schussende kann der Rotor axial derart verschoben werden, dass restliche Reaktionsmischung verdrängt wird und das Mischkammervolumen auf null reduziert wird. Erfindungsgemäß ist am Ausgang der Mischkammer 2 ein Verschlussschieber 9 vorgesehen. Erfindungsgemäß wird vor Schussbeginn der Rotor 12 gegen die äußere Mischkammerwand unter Verdrängung der Umgebungsluft gefahren, der Verschlussschieber 9 in Verschlussstellung gebracht, anschließend der Konus 12 unter Erzeugung einer evakuierten Mischkammer 2 in Arbeitsstellung gefahren und in Rotation versetzt. Der Schuss wird durch Öffnen der Injektionsdüsen 4 und 5 sowie Öffnen des Verschlussschiebers 9 eingeleitet.

Selbstverständlich ist es ebenfalls erfindungsgemäß möglich, bei dem Friktionsmischkopf die Einleitung von Kohlendioxidgas in die Mischkammer vorzusehen oder unter Verzicht auf den Verschlusschieber die Mischkammer lediglich mit Kohlendioxidgas zu spülen.

## Patentansprüche

1. Verfahren zur Herstellung von Polyurethan-Formkörpem aus einer fließfähigen Polyol-Polyisocyanat-Reaktionsmischung, die schussweise aus den fließfähigen Komponenten in der Mischkammer eines Mischkopfs hergestellt und über ein Auslaufrohr in Formwerkzeuge eingebracht wird, wobei die Mischkammer jeweils angenähert vollständig entleert wird, und zumindest vor Einleitung des jeweils nächsten Schusses die in der Mischkammer befindlichen Umgebungsgase entfernt werden, **dadurch gekennzeichnet, dass** die Mischkammer vor Schussbeginn mit Kohlendioxid gespült wird und die Umgebungsgase durch Kohlendioxid ersetzt werden.

2. Verfahren nach Anspruch 1, **dadurch gekennzeichnet, dass** die Mischkammer an ihrem Auslassende ein Verschlussorgan aufweist, das zumindest vor Einleiten des jeweils nächsten Schusses geschlossen wird und erst im Augenblick der Füllung der Mischkammer mit dem Reaktionsgemisch geöffnet wird.

## Claims

1. Process for producing polyurethane moulded bodies from a flowable polyol-polyisocyanate reaction mixture, which is produced shot-wise from the flowable components in the mixing chamber of a mixing head and is introduced via an outlet pipe into moulds, the mixing chamber being approximately completely emptied in each case, and the ambient gases located in the mixing chamber are removed at least before the respective next shot is initiated, **characterized in that** the mixing chamber is flushed with carbon dioxide before shot commencement and the ambient gases are replaced by carbon dioxide.

2. Process according to Claim 1, **characterized in that** at the outlet end thereof the mixing chamber has a closure element which is closed at least before the respective next shot is initiated and is opened only at the moment at which the mixing chamber is filled with the reaction mixture.

## Revendications

1. Procédé de préparation de corps moulés de polyuréthane à partir d'un mélange réactionnel polyol-polyisocyanate coulable qui est préparé d'une manière par coup à partir des composants coulables dans la chambre de mélange d'une tête de mélange et est amené via un tube de sortie dans un outil de moulage, dans lequel la chambre de mélange est sensiblement complètement vidée chaque fois, et au moins avant l'introduction de chaque coup suivant les gaz environnants se trouvant dans la chambre de mélange sont éliminés, **caractérisé en ce que** la chambre de mélange avant le commencement du coup est balayée par du dioxyde de carbone et les gaz environnants sont remplacés par du dioxyde de carbone.

2. Procédé selon la revendication 1, **caractérisé en ce que** la chambre de mélange présente dans son extrémité de sortie un organe de fermeture qui est fermé au moins avant l'introduction de chaque coup suivant et est ouvert seulement au moment du remplissage de la chambre de mélange avec le mélange réactionnel.
